# EUROPEAN PATENT APPLICATION

(11) **EP 4 354 654 A1**
(43) Date of publication of application: **17.04.2024**
(21) Application number: 22819136.7
(22) Date of filing: 17.03.2022
(51) Int. Cl.: H01Q 1/36, H01Q 5/28, H01Q 15/14, H01Q 21/00

(54) **MULTI-FREQUENCY ARRAY ANTENNA, RADIATION STRUCTURE AND METHOD FOR ASSEMBLING RADIATION STRUCTURE**

(30) Priority: 07.06.2021 CN 202110629219
(71) Applicant: COMBA TELECOM TECHNOLOGY (GUANGZHOU) LIMITED, Technological Development District Guangzhou, Guangdong 510730 (CN); Comba RF Technology (Guangzhou) Ltd, Guangzhou, Guangdong 510700 (CN)
(72) Inventor: WANG, Qiang, Guangzhou, Guangdong 510730 (CN); LIU, Peitao, Guangzhou, Guangdong 510730 (CN); JIANG, Chenqian, Guangzhou, Guangdong 510730 (CN)
(74) Representative: Herrero & Asociados, S.L.
(86) International application number: PCT/CN2022/081317
(87) International publication number: WO 2022/257531

(57) **Abstract**

The present invention relates to a multi-frequency array antenna, a radiation structure and a method for assembling the radiation structure. The radiation structure comprises a reflection plate and a high-frequency radiation unit. The reflection plate is provided with a first mounting surface; and the high-frequency radiation unit comprises a high-frequency vibrator and a first phase-shift network module, the high-frequency vibrator being electrically connected to the first phase-shift network module to form a mounting module, and the mounting module being fixedly arranged on the first mounting surface. The high-frequency vibrator and the first phase-shift network module are assembled and connected in advance to form the mounting module, and when the whole machine is subsequently assembled, the whole mounting module only needs to be mounted at a preset position on the first mounting surface of the reflection plate, such that the assembly process of the whole machine is simplified, the assembly difficulty is reduced, and the assembly efficiency is improved.

## Description

### TECHNICAL FIELD

The present invention relates to the field of wireless communication technology, and in particular to a multi-frequency array antenna, a radiation structure, and a method for assembling a radiation structure.

### BACKGROUND

With the rapid development of wireless communication technology, communication base stations have increasingly higher requirements for antennas. In addition, due to the current situation of multi-mode operation of mobile communications and difficulties in selecting communication base stations, the utilization rate of multi-frequency array antenna continues to increase. At the same time, in order to adapt to the development trend of miniaturization of the communication base station, the structure of multi-frequency array antenna has become more and more compact, which causes the coaxial cables of the phase-shifting network to overlap or entangle with each other, the assembly difficulty is increased.

### SUMMARY

Accordingly, it is necessary to provide a multi-frequency array antenna, a radiation structure and a method for assembling a radiation structure to address a problem of high assembly difficulty.

The technical solution is as follows:
On one aspect, a radiation structure is provided, includes:
a reflecting plate provided with a first mounting surface; and
a high-frequency radiation unit including a high-frequency oscillator and a first phase-shifting network module, the high-frequency oscillator being electrically connected to the first phase-shifting network module to form a mounting assembly, and the mounting assembly being fixed on the first mounting surface.

In the radiation structure of the above embodiment, the high-frequency oscillator and the first phase-shifting network module are pre-assembled and connected to form the mounting assembly. When a whole machine is assembled subsequently, it is only required to mount the entire mounting assembly at a preset position of the first mounting surface of the reflecting plate, thereby simplifying the assembly process of the whole machine, reducing the assembly difficulty and improving the assembly efficiency.

The technical solution is further described below.

In one of the embodiments, the reflecting plate is provided with a mounting groove recessed relative to the first mounting surface, the first phase-shifting network module is provided in the mounting groove, the high-frequency oscillator is provided outside the mounting groove, and a lower end surface of the high-frequency oscillator is coplanar with the first mounting surface.

In one of the embodiments, the high-frequency oscillator includes a feeding base and a feeding member, the first phase-shifting network module includes a phase-shifting network cavity and a phase-shifting network strip line provided in the phase-shifting network cavity, the feeding base is fixed on an upper side wall of the phase-shifting network cavity, the upper side wall of the phase-shifting network cavity is provided with a connecting through hole, the feeding member is capable of extending through the connecting through hole and being electrically connected to the phase-shifting network strip line; or the radiation structure further includes a first transmission line extending through the connecting through hole, and the first transmission line is configured to electrically connect the feeding member to the phase-shifting network strip line.

In one of the embodiments, a limiting member is provided on the upper side wall of the phase-shifting network cavity, and the limiting member protrudes from the mounting groove and is attached to the first mounting surface.

In one of the embodiments, operating frequency bands of the high-frequency oscillator and the first phase-shifting network module are from 1695MHz to 2690MHz; or operating frequency bands of the high-frequency oscillator and the first phase-shifting network module are from 1427MHz to 2690MHz.

In one of the embodiments, the reflecting plate is further provided with a second mounting surface spaced apart from the first mounting surface, and a mounting through hole extending through the first mounting surface and the second mounting surface, the radiation structure further includes a low-frequency oscillator, a second phase-shifting network module, and a second transmission line, the low-frequency oscillator is fixed on the first mounting surface and is spaced apart from the mounting assembly, the second phase-shifting network module is fixed on the second mounting surface, the second transmission line extends through the mounting through hole to electrically connect the low-frequency oscillator to the second phase-shifting network module.

In one of the embodiments, operating frequency bands of the low-frequency oscillator and the second phase-shifting network module is from 690MHz to 960MHz; or operating frequency bands of the low-frequency oscillator and the second phase-shifting network module is from 617MHz to 960MHz.

On another aspect, a multi-frequency array antenna is provided, including the radiation structure.

When assembling the multi-frequency array antenna of the above embodiment to the whole machine, it is sufficient to mount the pre-assembled mounting assembly at the preset position of the first mounting surface of the reflecting plate, thereby simplifying the assembly process of the whole machine, reducing the assembly difficulty and improving the assembly efficiency.

In one of the embodiments, the multi-frequency array antenna further includes a protective cover, and the radiation structure is provided in the protective cover.

On another aspect, a method for assembling a radiation structure is provided, including the following steps:
pre-assembling and connecting a high-frequency oscillator and a first phase-shifting network module to form a mounting assembly; and
mounting the entire mounting assembly at a preset position on a first mounting surface of a reflecting plate during an assembly process of a whole machine.

In the method for assembling the radiation structure of the above embodiment, the high-frequency oscillator and the first phase-shifting network module are pre-assembled and connected to form the mounting assembly. When assembling a whole machine subsequently, it is only required to mount the entire mounting assembly at a preset position on the first mounting surface of the reflecting plate, thus simplifying the assembly process of the whole machine, reducing the assembly difficulty and improving the assembly efficiency.

### BRIEF DESCRIPTION OF THE DRAWINGS

The drawings constitute a part of the present invention and are used to provide a further understanding of the present invention. The exemplary embodiments of the present invention and their descriptions are used to explain the present invention and do not constitute an improper limitation of the present invention.

In order to illustrate the embodiments of the present invention more clearly, the drawings used in the embodiments will be described briefly. Apparently, the following described drawings are merely for the embodiments of the present invention, and other drawings can be derived by those of ordinary skill in the art without any creative effort.
FIG. 1 is an exploded view of a radiation structure according to an embodiment;
FIG. 2 is an assembly view of the radiation structure of FIG. 1.
FIG. 3 is a schematic view of a mounting assembly of the radiation structure of FIG. 1.
FIG. 4 is a whole machine assembly view of a multi-frequency array antenna according to an embodiment.

### Description of reference signs:

100. Reflecting plate; 110. First mounting surface; 120. Mounting groove; 130. Second mounting surface; 200. Mounting assembly; 210. High-frequency oscillator; 211. Feeding base; 2111. Lower end surface; 212. Feeding member; 220. First phase-shifting network module; 221. Phase-shifting network cavity; 2211. Upper side wall; 2212. Limiting member; 222. Phase-shifting network strip line; 310. Low-frequency oscillator; 320. Second phase-shifting network module.

### DETAILED DESCRIPTION OF THE EMBODIMENTS

In order to make the above objects, features and advantages of the present invention clear and easier to understand, the specific embodiments of the present invention are described in detail below in combination with the accompanying drawings. Many specific details are set forth in the following description to facilitate a full understanding of the present invention. However, the present invention can be implemented in many ways different from those described herein, and those skilled in the art can make similar improvements without departing from the connotation of the present invention. Therefore, the present invention is not limited by the specific embodiments disclosed below.

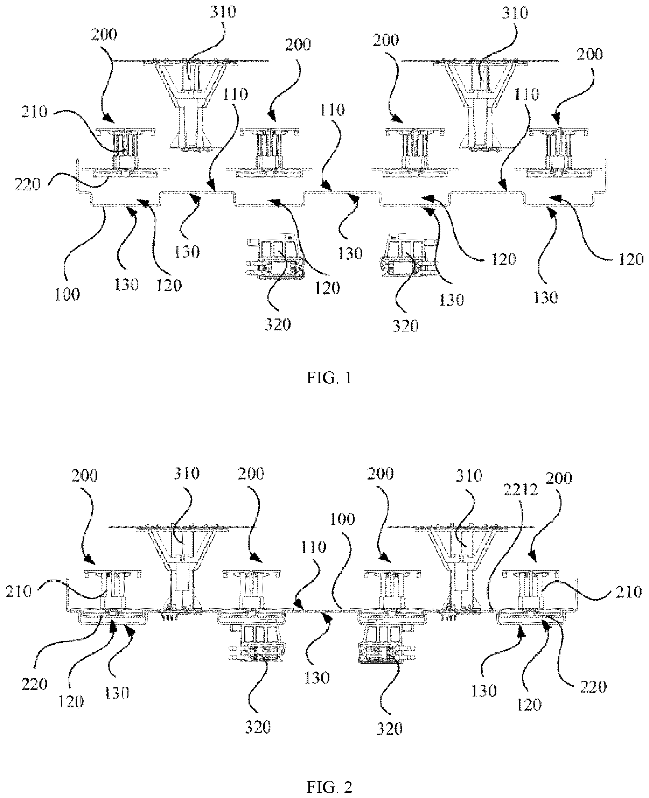

As shown in FIGS. 1 and 2, in an embodiment, a radiation structure is provided, which can be applied in a multi-frequency array antenna. The radiation structure includes a reflecting plate 100 and a high-frequency radiation unit (not labeled). Specifically, the reflecting plate 100 is provided with a first mounting surface 110. The high-frequency radiation unit includes a high-frequency oscillator 210 and a first phase-shifting network module 220. The high-frequency oscillator 210 is electrically connected to the first phase-shifting network module 220 to form a mounting assembly 200, and the mounting assembly 200 is fixed on the first mounting surface 110.

In the radiation structure of the above embodiment, the high-frequency oscillator 210 and the first phase-shifting network module 220 are pre-assembled and connected to form the mounting assembly 200 (e.g., the high-frequency oscillator 210 and the first phase-shifting network module 220 can be assembled during a production process). When assembling a whole machine subsequently, it is only required to mount the entire mounting assembly 200 at a preset position on the first mounting surface 110 of the reflecting plate 100, thereby simplifying the assembly process of the whole machine, reducing the assembly difficulty and improving the assembly efficiency.

In the conventional radiation structure, when assembling the whole machine, the high-frequency oscillator 210 is firstly mounted on a front surface of the reflecting plate 100, and then the first phase-shifting network module 220 is mounted on a rear surface of the reflecting plate 100, and finally the high-frequency oscillator 210 and the first phase-shifting network module 220 are electrically connected through transmission lines such as a coaxial cable passing through the reflecting plate 100. In order to adapt to the development trend of miniaturization, the structure of the radiation structure becomes more and more compact, so that during the assembly process of the whole machine, there will be difficulties in the layout of transmission lines such as coaxial cables, resulting in mutual overlap or entanglement, which not only increases the assembly difficulty, but also when there are many ports, it is easy to cause assembly errors and reduce assembly efficiency. In the radiation structure of the embodiment of the present application, the high-frequency oscillator 210 and the first phase-shifting network module 220 are assembled into the mounting assembly 200 in the production process. In the subsequent assembly process of the whole machine, it is only required to fix the mounting assembly 200 on the first mounting surface 110 (i.e., the front surface) of the reflecting plate 100, and it is not necessary to utilize the transmission lines such as coaxial cables to extend through the front surface and the rear surface of the reflecting plate 100, there will be no mutual overlap or entanglement problems caused by the difficulty in wiring the transmission lines such as coaxial cables. The assembly process of the complete machine is simplified. The operation is simple, no misoperation occurs, the assembly difficulty is reduced, the assembly efficiency is improved, and the assembly cost is reduced.

The high-frequency oscillator 210 can be any conventional oscillator structure capable of transmitting high-frequency signal. The first phase-shifting network module 220 may be any conventional component capable of adjusting a phase of the high-frequency oscillator 210.

Among them, as shown in FIGS. 1 and 2, in an embodiment, the reflecting plate 100 is provided with a mounting groove 120 that is recessed relative to the first mounting surface 110. In this way, the mounting assembly 200 can be arranged corresponding to the mounting groove 120, thereby completing the assembly connection between the mounting assembly 200 and the reflecting plate 100. Specifically, when the mounting assembly 200 is mounted corresponding to the mounting groove 120, the first phase-shifting network module 220 is provided in the mounting groove 120, and the high-frequency oscillator 210 is provided outside the mounting groove 120. Furthermore, a lower end surface 2111 of the high-frequency oscillator 210 is coplanar with the first mounting surface 110. In this way, when there are at least two high-frequency radiation units arranged on the reflecting plate 100 in an array, each high-frequency oscillator 210 is at the same mounting height (the mounting height refers to a height of the high-frequency oscillator 210 relative to the reflecting plate 100), which is conducive to improve radiation performance.

The electrical connection between the high-frequency oscillator 210 and the first phase-shifting network module 220 can be implemented using any conventional manner.

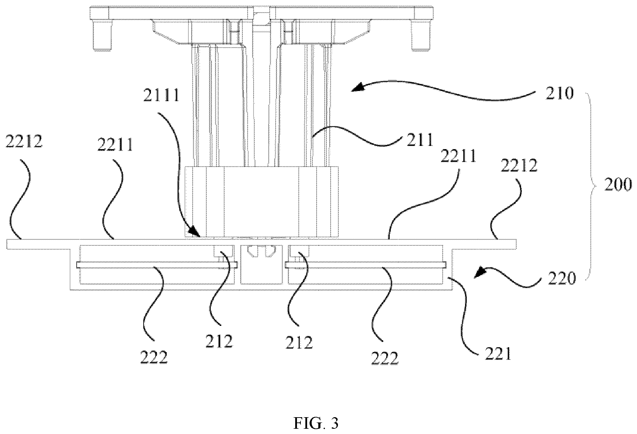

As shown in FIG. 3, in an embodiment, the high-frequency oscillator 210 includes a feeding base 211 and a feeding member 212. As shown in FIG. 3, the first phase-shifting network module 220 includes a phase-shifting network cavity 221 and a phase-shifting network strip line 222 provided in the phase-shifting network cavity 221. As shown in FIG. 3, the feeding base 211 is fixed on an upper side wall 2211 of the phase-shifting network cavity 221 by welding or screwing. The upper side wall 2211 of the phase-shifting network cavity 221 is provided with a connecting through hole (not labeled). In addition, the feeding member 212 protrudes from the feeding base 211, so that the feeding member 212 can extend through the connecting through hole and extend into the phase-shifting network cavity 221 and be electrically connected to the phase-shifting network strip line 222. In this way, the high-frequency oscillator 210 can be stably and reliably assembled with the first phase-shifting network module 220 as a whole to form the mounting assembly 200.

Certainly, in other embodiments, the radiation structure may further include a first transmission line (not shown). After the feeding base 211 is fixed on the upper side wall 2211 of the phase-shifting network cavity 221 by welding or screwing, the first transmission line extends through the connecting through hole, so that one end of the first transmission line is electrically connected to the feeding member 212, and the other end of the first transmission line is electrically connected to the phase-shifting network strip line 222, thereby achieving the electrical connection between the feeding member 212 and the phase-shifting network strip line 222. In this way, the high-frequency oscillator 210 can also be stably and reliably assembled with the first phase-shifting network module 220 as a whole to form the mounting assembly 200.

The feeding base 211 can be in a form of a balun or a feeding sheet. The feeding member 212 can be in a form of a probe or a pin. The electrical connection can be achieved by welding or screwing.

In addition, in order to enable the lower end surface of the high-frequency oscillator 210 to be coplanar with the first mounting surface 110, when the mounting assembly 200 is mounted corresponding to the mounting groove 120, a corresponding positioning or limiting structure can also be provided.

As shown in FIG. 3, in an embodiment, the upper side wall 2211 of the phase-shifting network cavity 221 is provided with a limiting member 2212 protruding from the mounting groove 120. As shown in FIG. 2, furthermore, the limiting member 2212 is attached to the first mounting surface 110. In this way, when the mounting assembly 200 is mounted corresponding to the mounting groove 120, the phase-shifting network cavity 221 located at a lower end of the mounting assembly 200 is placed in the mounting groove 120, so that the limiting member 2212 provided on the upper side wall 2211 of the phase-shifting network cavity 221 is attached to the first mounting surface 110, thereby completing the positioning and mounting of the mounting assembly 200. After the positioning member 2212 is fixedly connected to the reflecting plate 100 by screwing or welding, the assembly connection between the mounting assembly 200 and the reflecting plate 100 can be completed, which is simple, convenient, low in assembly difficulty, and high in assembly efficiency. The limiting member 2212 may be in a form of a limiting sheet, a limiting flange, etc.

In addition, the operating frequency bands of the high-frequency oscillator 210 and the first phase-shifting network module 220 can be flexibly selected or adjusted according to actual usage requirements. For example, the operating frequency bands of the high-frequency oscillator 210 and the first phase-shifting network module 220 may be from 1695 MHz to 2690 MHz. Alternatively, the operating frequency bands of the high-frequency oscillator 210 and the first phase-shifting network module 220 may also be from 1427 MHz to 2690 MHz, as long as the corresponding usage requirements are met.

As shown in FIGS. 1 and 2, based on any of the above embodiments, the reflecting plate 100 is further provided with a second mounting surface 130 (i.e., the rear surface of the reflecting plate 100) that is spaced apart from the first mounting surface 110), and a mounting through hole (not shown) that extends through the first mounting surface 110 and the second mounting surface 130. The radiation structure further includes a low-frequency oscillator 310, a second phase-shifting network module 320, and a second transmission line (not shown). The low-frequency oscillator 310 is fixed on the first mounting surface 110 by plugging, screwing or welding, and the low-frequency oscillator 310 is spaced apart from the mounting assembly 200. The second phase-shifting network module 320 is fixed on the second mounting surface 130 by plugging, screwing or welding. In addition, the second transmission line extends through the mounting through hole. One end of the second transmission line is electrically connected to the low-frequency oscillator 310 by welding, screwing, etc., and the other end of the second transmission line is electrically connected to the second phase-shifting network module 320 by welding, screwing, etc., so that the low-frequency oscillator 310 is electrically connected to the second phase-shifting network module 320.

The low-frequency oscillator 310 can be any conventional oscillator structure capable of transmitting low-frequency signals. The second phase-shifting network module 320 may be any conventional component capable of adjusting a phase of the low-frequency oscillator 310.

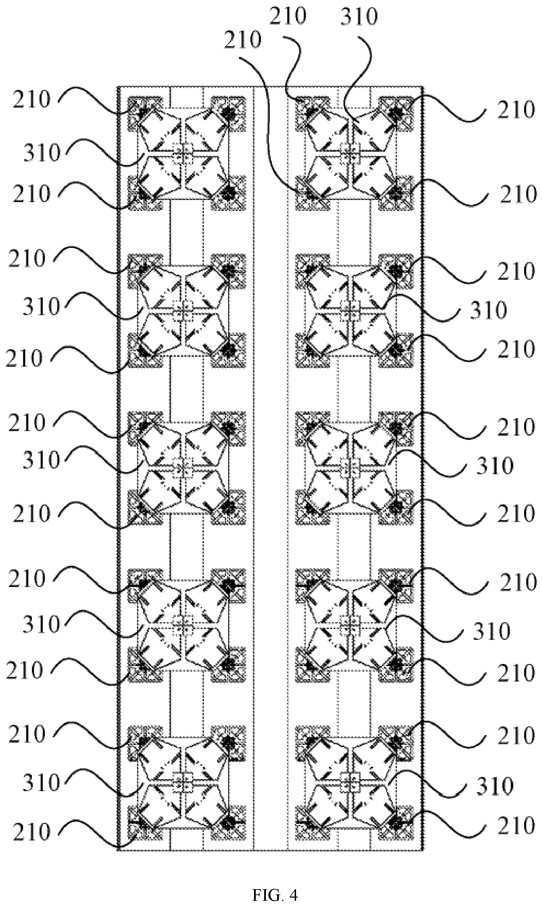

Both the low-frequency oscillator 310 and the high-frequency oscillator 210 can be fixed on the first mounting surface 110 in a form of an array, so as to meet the usage requirement of multiple-frequency. For example, as shown in FIG. 4, The array may be five rows and two columns of low-frequency oscillators 310 and ten rows and four columns of high-frequency oscillators 210. One low-frequency oscillator 310 is provided in a middle of an area surrounded by four high-frequency oscillators 210. Certainly, in other embodiments, the low-frequency oscillator 310 and the high-frequency oscillator 210 can also be arranged in other ways, as long as the corresponding radiation performance and multi-frequency requirements are met. In addition, a distance between the low-frequency oscillator 310 and the high-frequency oscillator 210 can also be reasonably designed or adjusted according to actual radiation requirements. The low-frequency oscillators 310 are arranged in one-to-one correspondence with the second phase-shifting network modules 320, and the high-frequency oscillators 210 are arranged in one-to-one correspondence with the first phase-shifting network modules 220.

As shown in FIG. 2, further, the second phase-shifting network module 320 is provided corresponding to the mounting assembly 200. Due to a large size of the second phase-shifting network module 320, the second phase-shifting network module 320 can be provided at a fixing position on the second mounting surface 130 corresponding to the mounting assembly 200, so that a space of the second mounting surface 130 of the reflecting plate 100 can be fully utilized, so as to make the entire radiation structure more compact, and adapt to the development trend of miniaturization. The second phase-shifting network module 320 is arranged corresponding to the mounting assembly 200, which means that the second phase-shifting network module 320 is provided directly below the mounting assembly 200 in a direction perpendicular to the reflecting plate 100. Certainly, in other embodiments, the second phase-shifting network module 320 may not be arranged corresponding to the mounting assembly 200, as long as the corresponding mounting requirements are met.

In addition, the operating frequency bands of the low-frequency oscillator 310 and the second phase-shifting network module 320 can be flexibly selected or adjusted according to actual usage requirements. For example, the operating frequency bands of the low-frequency oscillator 310 and the second phase-shifting network module 320 may be from 690 MHz to 960 MHz. Alternatively, the operating frequency bands of the low-frequency oscillator 310 and the second phase-shifting network module 320 may also be from 617 MHz to 960 MHz, as long as the corresponding usage requirements are met.

In an embodiment, a multi-frequency array antenna is also provided, which includes the radiation structure of any of the above embodiments.

When assembling the multi-frequency array antenna of the above embodiment to the whole machine, it is only required to mount the pre-assembled mounting assembly 200 at the preset position of the first mounting surface 110 of the reflecting plate 100, thereby simplifying the assembly process of the whole machine, reducing the assembly difficulty and improving the assembly efficiency.

Optionally, the multi-frequency array antenna further includes a protective cover (not shown), and the radiation structure is provided in the protective cover. In this way, the radiation structure is packaged in the protective cover, thereby protecting the radiation structure from external interference.

In an embodiment, a method for assembling a radiation structure is further provided, which includes the following steps. S 100, the high-frequency oscillator 210 and the first phase-shifting network module 220 are pre-assembled and connected to form the mounting assembly 200. S200, during the whole machine assembly process, the entire mounting assembly 200 is mounted at a preset position on the first mounting surface 110 of the reflecting plate 100.

In the method for assembling the radiation structure of the above embodiment, the high-frequency oscillator 210 and the first phase-shifting network module 220 are pre-assembled and connected to form the mounting assembly 200. When assembling a whole machine subsequently, it is only required to mount the entire mounting assembly 200 at a preset position on the first mounting surface 110 of the reflecting plate 100, thus simplifying the assembly process of the whole machine, reducing the assembly difficulty and improving the assembly efficiency.

It should be noted that "a body" and "a portion" can be part of the corresponding "component", that is, "a body" and "a portion" are integrally formed with the "other parts of the component". They can also be an independent component that is separable from "other parts of the component", that is, "a body" or "a portion" can be manufactured independently and then combined with "other parts of the component" to form a whole. The expressions "a body" and "a portion" mentioned above in present application are only one of the embodiments. They are for the convenience of reading and are not intended to limit the scope of protection of present application. As long as the above features are included and the functions are the same, it should be understood as an equivalent technical solution of present application.

It should be noted that the components included in the "unit", "assembly", "mechanism" and "device" of present application can also be flexibly combined, and modular production can be carried out according to actual needs to facilitate modularization assembly. The division of the above-mentioned components in present application is only one of the embodiments. It is for the convenience of reading and is not intended to limit the scope of protection of present application. As long as the above-mentioned components are included and the functions are the same, it should be understood as an equivalent technical solution of present application.

In the description of the present invention, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and other indicated orientations or positional relationships are based on the orientations or positional relationships shown in the accompanying drawings, and are only for the convenience of describing the present invention and simplifying the description, rather than indicating or implying the indicated device or elements must have a particular orientation, or be constructed and operate in a particular orientation, so it should not be understood as a limitation of the present invention. The term "and/or" as used herein includes any and all combinations of one or more of the associated listed items.

In addition, the terms "first" and "second" in the present application are used for descriptive purposes only and cannot be understood as indicating or implying relative importance or implicitly indicating the number or order of indicated technical features. Therefore, features defined as "first" and "second" may explicitly or implicitly include at least one of these features. In the description of the present application, "plurality" means at least two, such as two, three, etc., unless otherwise expressly and specifically limited.

In the present invention, unless otherwise expressly specified and limited, the terms "installed", "connection", "connected", "fixed" and other terms should be understood in a broad sense. For example, it may be a fixed connection or a detachable connection, or integrated. It can be a mechanical connection or an electrical connection. It can be directly connected or indirectly connected through an intermediate medium. It can be the internal connection of two elements or the interaction relationship between the two elements, unless otherwise specified limit. For those of ordinary skill in the art, the specific meanings of the above terms in the present invention can be understood according to specific situations.

In the present invention, unless otherwise expressly specified and limited, the first feature "above" or "below" the second feature may be in direct contact with the first and second features, or the first and second features may be in indirect contact through an intermediate medium. Moreover, the first feature being "above" and "over" the second feature may mean that the first feature is directly above or diagonally above the second feature, or it only means that the horizontal height of the first feature is higher than the second feature. The first feature being "below" of the second feature may mean that the first feature is directly below or obliquely below the second feature, or simply means that the horizontal height of the first feature is less than that of the second feature.

It should be noted that when an element is referred to as being "fixed to", "provided on", "fixedly connected to" or "mounted on" another element, it can be directly on the other element or an intervening element may also be present. When an element is referred to as being "connected" to another element, it can be directly connected to the other element or intervening elements may also be present. Furthermore, when one element is considered to be a "fixed transmission connection" to another element, the two elements can be fixed in a detachable connection, or they can be fixed in a non-detachable connection, as long as a power transmission can be achieved, such as sleeving, engaging, integrally forming, welding, etc., which can be achieved in the prior art, and will not be repeated herein. When an element is perpendicular or approximately perpendicular to another element, it means that the ideal state of the two components is perpendicular. However, due to the influence of manufacturing and assembly, there may be a certain vertical error. The terms "vertical", "horizontal", "upper", "lower", "left", "right" and similar expressions used herein are for the purpose of illustration only and do not represent the only embodiment. The term "and/or" as used herein includes any and all combinations of one or more of the associated listed items.

It should also be understood that when explaining the connection relationship or positional relationship of elements, although not explicitly described, the connection relationship and positional relationship are interpreted to include an error range, which should be within the acceptable deviation range for a particular value as determined by a person skilled in the art. For example, "about," "approximately," or "substantially" may mean within one or more standard deviations and is not limited herein.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present invention, but are not intended to limit the protection scope of the present invention. Any variation or replacement readily figured out by a person skilled in the art within the technical scope disclosed in the present invention shall all fall within the protection scope of the present invention.

## Claims

1. A radiation structure, comprising:
a reflecting plate provided with a first mounting surface; and
a high-frequency radiation unit comprising a high-frequency oscillator and a first phase-shifting network module, the high-frequency oscillator being electrically connected to the first phase-shifting network module to form a mounting assembly, and the mounting assembly being fixed on the first mounting surface.

2. The radiation structure according to claim 1, wherein the reflecting plate is provided with a mounting groove recessed relative to the first mounting surface, the first phase-shifting network module is provided in the mounting groove, the high-frequency oscillator is provided outside the mounting groove, and a lower end surface of the high-frequency oscillator is coplanar with the first mounting surface.

3. The radiation structure according to claim 2, wherein the high-frequency oscillator comprises a feeding base and a feeding member, the first phase-shifting network module comprises a phase-shifting network cavity and a phase-shifting network strip line provided in the phase-shifting network cavity, the feeding base is fixed on an upper side wall of the phase-shifting network cavity, the upper side wall of the phase-shifting network cavity is provided with a connecting through hole, the feeding member is capable of extending through the connecting through hole and being electrically connected to the phase-shifting network strip line;
or the radiation structure further comprises a first transmission line extending through the connecting through hole, and the first transmission line is configured to electrically connect the feeding member to the phase-shifting network strip line.

4. The radiation structure according to claim 3, wherein a limiting member is provided on the upper side wall of the phase-shifting network cavity, and the limiting member protrudes from the mounting groove and is attached to the first mounting surface.

5. The radiation structure according to claim 1, wherein operating frequency bands of the high-frequency oscillator and the first phase-shifting network module are from 1695MHz to 2690MHz;
or operating frequency bands of the high-frequency oscillator and the first phase-shifting network module are from 1427MHz to 2690MHz.

6. The radiation structure according to any one of claims 1 to 5, wherein the reflecting plate is further provided with a second mounting surface spaced apart from the first mounting surface, and a mounting through hole extending through the first mounting surface and the second mounting surface, the radiation structure further comprises a low-frequency oscillator, a second phase-shifting network module, and a second transmission line, the low-frequency oscillator is fixed on the first mounting surface and is spaced apart from the mounting assembly, the second phase-shifting network module is fixed on the second mounting surface, the second transmission line extends through the mounting through hole to electrically connect the low-frequency oscillator to the second phase-shifting network module.

7. The radiation structure according to claim 6, wherein operating frequency bands of the low-frequency oscillator and the second phase-shifting network module is from 690MHz to 960MHz;
or operating frequency bands of the low-frequency oscillator and the second phase-shifting network module is from 617MHz to 960MHz.

8. A multi-frequency array antenna, comprising the radiation structure according to any one of claims 1 to 7.

9. The multi-frequency array antenna according to claim 8, further comprising a protective cover, wherein the radiation structure is provided in the protective cover.

10. A method for assembling a radiation structure, comprising the following steps:
pre-assembling and connecting a high-frequency oscillator and a first phase-shifting network module to form a mounting assembly; and
mounting the entire mounting assembly at a preset position on a first mounting surface of a reflecting plate during an assembly process of a whole machine.
